# FASCICULE DE BREVET EUROPEEN

(11) **EP 3 182 571 B1**
(45) Date de publication et mention de la délivrance du brevet: **20.11.2019**
(21) Numéro de dépôt: 16167195.3
(22) Date de dépôt: 27.04.2016
(51) Int. Cl.: H02M 1/08, H02M 7/162, H02M 7/06

(54) **CIRCUIT DE REDRESSEMENT À THYRISTORS**
GLEICHRICHTERANORDNUNG MIT THYRISTOREN
RECTIFIER CIRCUIT WITH THYRISTORS

(30) Priorité: 15.12.2015 FR 1562393
(43) Date de publication de la demande: 21.06.2017
(73) Titulaire: STMicroelectronics (Tours) SAS, 37100 Tours (FR)
(72) Inventeur: BENABDELAZIZ, Ghafour, 37000 TOURS (FR); GONTHIER, Laurent, 10462 Taipei City (TW)
(74) Mandataire: Cabinet Beaumont

(56) Documents cités:
- CN-A- 86 104 377
- FR-A1- 2 742 013
- FR-A1- 2 746 981
- US-B1- 8 593 842

## Description

### Domaine

La présente description concerne de façon générale les circuits électroniques et, plus particulièrement, la réalisation d'un pont redresseur à base de diodes et de thyristors.

### Exposé de l'art antérieur

On connaît de nombreuses solutions de ponts redresseurs commandables, basés sur l'utilisation de thyristors.

Par exemple, le document US 6,493,245 décrit un pont redresseur dont deux thyristors à gâchette de cathode sont prévus dans la partie haute du pont, c'est-à-dire avec les cathodes connectées au potentiel positif de la tension redressée.

Le document FR-A-2746981 décrit un dispositif de commande d'un pont mixte comprenant deux thyristors à gâchette d'anode dont les cathodes sont reliées ensemble à une borne de sortie positive et dont les gâchettes sont interconnectées, le dispositif comportant un thyristor GTO.

Le document FR-A-2742013 décrit un procédé et un dispositif de limitation d'appel de courant d'un condensateur associé à un redresseur basé sur l'utilisation d'un pont mixte.

Le document CN 86104377 décrit un circuit de redressement basé sur un pont mixte à deux thyristors à gâchette de cathode.

Le document US 8 593 842 B1 décrit un pont redresseur à diodes qui peut être connecté à la masse à travers un interrupteur.

### Résumé

Un mode de réalisation vise à pallier tout ou partie des inconvénients des ponts redresseurs à thyristors usuels.

Un autre mode de réalisation vise plus particulièrement à proposer un pont redresseur commandable dont la commande est simplifiée.

Un autre mode de réalisation vise à proposer un pont redresseur commandable compatible avec des applications dans lesquelles le courant de la charge commandée par le pont varie dans des proportions importantes.

Ainsi, un mode de réalisation prévoit un circuit de redressement comportant :
entre une première borne d'application d'une tension alternative et une première borne de fourniture d'une tension redressée, au moins une première diode ;
entre une deuxième borne d'application de la tension alternative et une deuxième borne de fourniture de la tension redressée, au moins un premier thyristor à gâchette d'anode, l'anode du premier thyristor étant connectée à la deuxième borne de fourniture de la tension redressée ; et
au moins un premier étage de commande du premier thyristor, comportant :
   un premier transistor couplant la gâchette du thyristor à une borne de fourniture d'un potentiel négatif par rapport au potentiel de la deuxième borne de fourniture de la tension redressée ; et
   un deuxième transistor reliant une borne de commande du premier transistor à une borne de fourniture d'un potentiel positif par rapport au potentiel de la deuxième borne de fourniture de la tension redressée,
   l'anode du premier thyristor étant connectée au potentiel commun de tensions définies par lesdits potentiels positif et négatif.

Selon un mode de réalisation, le circuit comporte en outre :
entre la deuxième borne d'application de la tension alternative et la première borne de fourniture de la tension redressée, au moins une deuxième diode ;
entre la première borne d'application de la tension alternative et la deuxième borne de fourniture de la tension redressée, au moins un deuxième thyristor à gâchette d'anode, l'anode du deuxième thyristor étant connectée à la deuxième borne de fourniture de la tension redressée ; et
au moins un deuxième étage de commande du deuxième thyristor, comportant :
   un troisième transistor couplant la gâchette du deuxième thyristor à ladite borne de fourniture dudit potentiel négatif ; et
   un quatrième transistor reliant une borne de commande du troisième transistor à ladite borne de fourniture dudit potentiel positif.

Un mode de réalisation prévoit un circuit de redressement comportant :
une première borne et une deuxième borne, destinées à recevoir une tension alternative ;
une troisième borne et une quatrième borne, destinées à fournir une tension redressée ;
un pont de redressement dont des bornes d'entrée sont respectivement connectées aux première et deuxième bornes, et dont
des bornes de sortie sont respectivement connectées à la troisième borne, et reliées par un premier thyristor à gâchette d'anode à la quatrième borne ; et
un étage de commande du thyristor comportant :
   un premier transistor couplant la gâchette du premier thyristor à une borne de fourniture d'un potentiel négatif par rapport au potentiel de la deuxième borne de fourniture de la tension redressée ; et
   un deuxième transistor reliant une borne de commande du premier transistor à une borne de fourniture d'un potentiel positif par rapport au potentiel de la deuxième borne de fourniture de la tension redressée,
   l'anode du premier thyristor étant connectée au potentiel commun de tensions définies par lesdits potentiels positif et négatif.

Selon un mode de réalisation, le deuxième ou les deuxième et quatrième transistors sont commandés par un circuit numérique.

Selon un mode de réalisation, un élément résistif est intercalé entre la gâchette du premier ou de chaque thyristor et le premier transistor ou chacun des premier et troisième transistors.

Selon un mode de réalisation, un élément résistif est intercalé entre la base du premier ou de chacun des premier et troisième transistors et le deuxième ou chacun des deuxième et quatrième transistors MOS.

Selon un mode de réalisation, le premier ou les premier et troisième transistors sont des transistors bipolaires, de préférence de type NPN.

Selon un mode de réalisation, le deuxième ou les deuxième et quatrième transistors sont des transistors MOS.

Selon un mode de réalisation, le circuit de commande est alimenté par une tension positive fournie par un circuit d'alimentation connecté à la première borne de fourniture de la tension redressée, un condensateur reliant le circuit d'alimentation à la deuxième borne de fourniture de la tension redressée.

Selon un mode de réalisation, ledit potentiel négatif est obtenu, à partir du circuit d'alimentation, par un circuit de pompe de charge.

Selon un mode de réalisation, au moins une diode en série avec un élément résistif relie la deuxième borne de fourniture de la tension redressée à une des bornes d'application de la tension alternative.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple de pont redresseur à thyristors usuel ;
la figure 2 est un schéma-blocs d'un mode de réalisation d'un circuit de redressement commandable à thyristors ;
la figure 3 est un schéma électrique d'un mode de réalisation du circuit de la figure 2 ;
la figure 4 illustre un exemple de circuit de génération d'une tension négative pour le pont redresseur des figures 2 et 3 ;
la figure 5 représente partiellement une variante de réalisation ;
la figure 6 représente partiellement une autre variante de réalisation ; et
la figure 7 représente partiellement un autre mode de réalisation.

### Description détaillée

De mêmes éléments ont été désignés par de mêmes références aux différentes figures. Par souci de clarté, seuls les éléments utiles à la compréhension des modes de réalisation décrits ont été représentés et seront détaillés. En particulier, l'utilisation faite de la tension redressée n'a pas été détaillée, les modes de réalisation décrits étant compatibles avec les applications usuelles d'une telle tension redressée. De plus, les circuits de génération de signaux de commande à partir d'un microcontrôleur n'ont pas non plus été détaillés, les modes de réalisation décrits étant là encore compatibles avec les circuits usuels de génération de signaux de commande. Pour simplifier, on négligera dans les explications qui suivent les chutes de tension en direct dans les diodes et les thyristors.

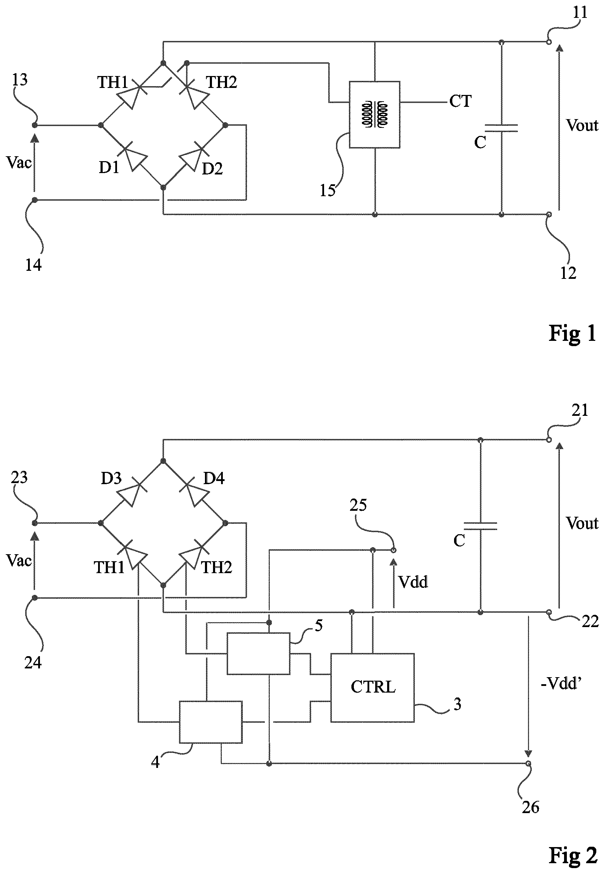

La figure 1 est un schéma électrique d'un exemple de pont redresseur commandable à thyristors du type décrit dans le document US 6,493,245 susmentionné. Ce pont est un pont double alternance et comporte deux branches parallèles entre deux bornes 11 et 12 de fourniture d'une tension redressée Vout. Chaque branche comporte un thyristor Th1, respectivement Th2, relié à une diode D1, respectivement D2, les anodes des diodes étant côté borne 12 qui définit le potentiel le plus négatif (généralement la masse ou potentiel de référence) de la tension redressée Vout. Les points milieux respectifs entre les thyristors et les diodes définissent deux bornes 13 et 14 d'application d'une tension alternative Vac à redresser. Un élément capacitif C est généralement connecté entre les bornes 11 et 12 pour lisser la tension redressée.

Les thyristors Th1 et Th2 sont des thyristors à gâchette de cathode destinés à être commandés à partir d'un signal CT.

Dans un tel pont redresseur commandable, on ne peut pas appliquer une tension de commande provenant directement d'un microcontrôleur ni, plus généralement, une tension directement référencée au potentiel de référence 12, en raison de la référence des cathodes des thyristors Th1 et Th2 qui se situe côté potentiel le plus positif (borne 11) de la tension redressée. Cela impose d'utiliser un élément de conversion 15 de type transformateur à isolement galvanique ou optocoupleur pour convertir la référence du signal de commande.

Une telle réalisation accroît les coûts de production d'un pont redresseur commandable.

La figure 2 représente, de façon très schématique et sous forme de blocs, un mode de réalisation d'un circuit de redressement commandable (pont redresseur à thyristors). Ce circuit comporte un pont redresseur ayant deux branches parallèles entre deux bornes 21 et 22 de fourniture d'une tension redressée Vout, la borne 22 représentant un potentiel de référence, typiquement la masse GND. Chaque branche comporte une diode D3, respectivement D4, connectée à un thyristor TH1, respectivement TH2, entre les bornes 21 et 22, les anodes des thyristors étant connectées à la borne 22 et les cathodes des diodes étant connectées à la borne 21. Les points milieu respectifs des deux branches définissent des bornes 23 et 24 d'application d'une tension alternative Vac à redresser, la borne 23 étant reliée à l'anode de la diode D3 et à la cathode du thyristor TH1, la borne 24 étant reliée à l'anode de la diode D4 et à la cathode du thyristor TH2. Un élément capacitif C de filtrage relie de préférence les bornes 21 et 22.

Les thyristors TH1 et TH2 sont des thyristors à gâchette d'anode. Les gâchettes respectives des thyristors TH1 et TH2 reçoivent des signaux de commande d'un circuit 3 de type circuit numérique de commande ou microcontrôleur (CTRL), par l'intermédiaire d'étages 4 et 5. Le circuit de commande 3 est, par exemple, un microcontrôleur ou un circuit intégré alimenté à partir d'une basse tension positive (par exemple d'une valeur comprise entre 3,3 volts et 12 volts). La basse tension positive Vdd est fournie entre une borne 25 à un potentiel Vdd positif et la borne 22. La tension Vdd est basse par rapport à la tension Vout (de l'ordre de la dizaine de volts à plusieurs centaines de volts).

Pour qu'un courant circule dans un des thyristors TH1 et TH2, il faut que son potentiel d'anode soit supérieur à son potentiel de cathode et qu'il soit activé en tirant un courant sur sa gâchette. Comme les anodes des thyristors TH1 et TH2 sont connectées à la borne 22, pour tirer un courant sur leurs gâchettes respectives, il faut porter celles-ci à un potentiel négatif par rapport à la masse. Pour pouvoir traiter directement (sans optocoupleur ou analogue) les signaux de commande reçus du circuit 3, les étages 4 et 5 sont alimentés à partir du potentiel positif Vdd (borne 25). Toutefois, afin de pouvoir porter les gâchettes à un potentiel négatif, la référence (potentiel bas) des étages 4 et 5 n'est pas la masse, mais un potentiel négatif -Vdd' fourni sur une borne 26. Les valeurs absolues des potentiel Vdd et -Vdd' peuvent être identiques ou différentes en fonction des tensions positive et négative adaptées à l'application et aux composants et circuits utilisés.

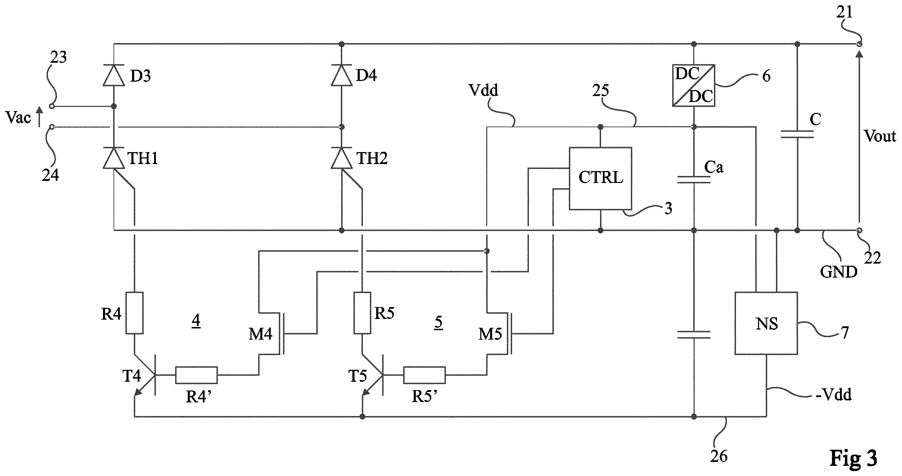

La figure 3 est un schéma électrique d'un mode de réalisation du circuit de la figure 2. La figure 3 détaille en particulier des exemples de constitution des étages 4 et 5 et de génération de la tension positive Vdd.

Chaque étage 4, 5, comporte une résistance, respectivement R4, R5, en série avec un transistor bipolaire T4, T5, de type NPN, entre la gâchette du thyristor TH1, respectivement TH2, et la borne 26 au potentiel -Vdd, l'émetteur du transistor T4 ou T5 étant connecté à la borne 26. La base du transistor T4, respectivement T5 est reliée, par l'intermédiaire d'un transistor MOS M4, respectivement M5, en série avec une résistance R4', respectivement R5', à la borne 25 au potentiel Vdd. Le transistor M4, respectivement M5, est côté borne 25. Les grilles des transistors M4 et M5 sont reliées à des sorties du circuit de commande 3 fournissant des signaux continus de commande. Le circuit 3 ou microcontrôleur peut, d'autre part, recevoir des informations d'autres circuits non représentés.

Les grilles des transistors M4 et M5 sont, au repos, au potentiel Vdd. Ainsi, les transistors M4 et M5 sont bloqués, de même que les transistors T4 et T5. Les thyristors TH1 et TH2 sont alors bloqués et le pont de redressement est éteint.

Pour rendre passant un des thyristors TH1 ou TH2, le circuit 3 porte sa sortie reliée à la grille du transistor M4 ou M5 correspondant à la masse. Ainsi, le transistor M4, respectivement M5 devient passant. Un courant de base est alors injecté dans la base du transistor T4, respectivement T5, ce qui le rend passant. Un courant de gâchette est alors tiré sur la gâchette du thyristor TH1 ou TH2 concerné et la branche correspondante du pont est ainsi passante.

En pratique, le thyristor TH2 est rendu passant pendant les alternances positives de la tension d'entrée Vac et le thyristor TH1 est rendu passant pendant les alternances négatives.

Les résistances R4', R5', R4 et R5 permettent de fixer le courant dans les bases respectives des transistors T4 et T5 et dans les gâchettes respectives des thyristors TH1 et TH2.

En variante, les transistors MOS M4 et M5 sont remplacés par des transistors bipolaires, par exemple, si le circuit 3 peut fournir une commande en courant. De même, les transistors bipolaires T4 et T5 peuvent être remplacés par des transistors MOS.

La tension Vdd positive peut provenir d'une source d'alimentation externe mais est, de préférence, générée par un circuit d'alimentation 6 (DC/DC) à partir de la tension Vout. Un élément capacitif Ca est connecté entre le circuit 6 et la borne 22. Le circuit 6 est du type régulateur de tension afin de fournir une tension d'alimentation adaptée au circuit 3.

De préférence, la tension négative -Vdd' est obtenue, indirectement à partir de la tension Vout, par un circuit 7 (NS) générant, à partir de la tension Vdd, la tension -Vdd'.

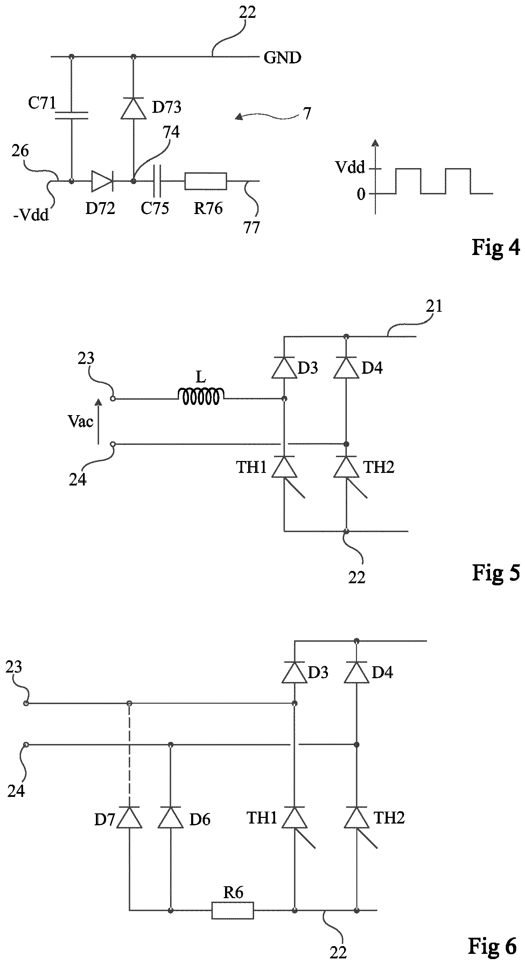

La figure 4 représente un exemple de circuit 7 de génération d'une tension négative -Vdd.

Dans cet exemple, le circuit 7 a la forme d'une pompe de charge capacitive et comporte, entre les bornes 26 et 22, un premier condensateur C71 et, en parallèle deux diodes D72 et D73 en série, les anodes des diodes D72 et D73 étant côté borne 26. Le point milieu 74 entre les diodes D72 et D73 (anode de la diode D73 et cathode de la diode D72) est relié, par un deuxième condensateur C75 en série avec une résistance R76, à une borne 77 d'application d'un train d'impulsions au potentiel Vdd. La borne 77 est, par exemple, connectée à une borne de sortie du circuit numérique 3. Le fonctionnement d'un circuit de pompe de charge tel qu'illustré par la figure 4 est en lui-même usuel.

D'autres structures de génération d'une tension d'alimentation négative pourront être prévues, par exemple à plusieurs étages capacitifs.

Un avantage des modes de réalisation décrits est, par rapport au circuit de la figure 1, qu'il n'est plus nécessaire d'avoir recours à un élément de conversion du type opto-coupleur ou transformateur d'isolement galvanique pour appliquer les signaux de commande aux thyristors. Cela simplifie considérablement la réalisation d'un pont redresseur commandable et réduit son coût.

Dans un mode de réalisation où les tensions Vdd et -Vdd' sont fournies par des circuits externes, les commandes peuvent être fournies par le circuit 3, même avec un condensateur C initialement déchargé.

Dans le mode de réalisation de la figure 3 où les tensions Vdd et -Vdd' sont obtenues à partir de la tension Vout, il faut prévoir une aide au démarrage.

La figure 5 illustre partiellement un exemple de réalisation d'un circuit de démarrage.

Selon cet exemple, on prévoit un élément inductif L entre l'une des bornes 23 et 24 (en figure 5, la borne 23) et l'entrée du pont à laquelle cette borne est connectée. L'effet de cette inductance est de ralentir la croissance du courant prélevé aux bornes 23 et 24 lorsque les thyristors TH1 et TH2 sont amorcés alors que le condensateur C n'est pas ou est très faiblement chargé.

Un élément inductif (non représenté) peut aussi être placé en sortie, entre par exemple la borne 21 et le point commun des deux anodes des thyristors TH1 et TH2. Cet élément inductif peut être placé en amont ou en aval du condensateur C. Ce type d'élément peut être utilisé par exemple dans un circuit d'alimentation à découpage utilisé pour corriger le facteur de puissance du courant prélevé sur le réseau.

La figure 6 illustre partiellement une variante d'un circuit de démarrage.

Selon cet exemple, une diode D6 relie l'une des bornes d'entrée (par exemple la borne 24) à la masse 22 par l'intermédiaire d'une résistance R6. Le cas échéant, une autre diode D7 relie l'autre borne d'entrée (par exemple 23) à la résistance R6 pour démarrer en double alternance. L'effet de cette résistance (qui en général présente un coefficient de variation avec sa température) est de permettre la charge du condensateur C à la mise sous tension, alors que le circuit 3 n'est pas encore alimenté et ne peut donc pas commander les thyristors TH1 et TH2 qui sont donc à l'état bloqué (empêchant autrement toute charge de C). Un tel mode de réalisation permet d'alimenter le circuit 3 en évitant un élément inductif en entrée du pont.

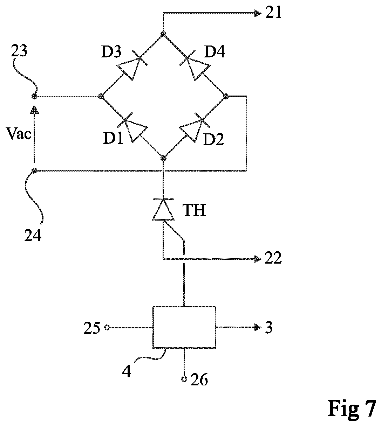

La figure 7 illustre partiellement un autre mode de réalisation dans lequel le pont de redressement est un pont double alternance constitué uniquement de diodes D1, D2, D3 et D4. Cela revient à remplacer les thyristors TH1 et TH2 par des diodes D1 et D2. Le pont est alors commandé par un seul thyristor à gâchette d'anode TH connecté entre les anodes communes des diodes D1 et D2 et la borne 22. Le thyristor TH est commandé par un circuit 4.

Divers modes de réalisation ont été décrits. Diverses variantes et modifications apparaîtront à l'homme de l'art. En particulier, bien que les modes de réalisation aient été décrits en relation avec un exemple de pont redresseur double alternance, on pourra prévoir un pont monoalternance en utilisant un seul thyristor. On pourra aussi prévoir un réseau multiphase avec autant de bras thyristor-diode que de phases (par exemple, trois thyristors et trois diodes pour un réseau triphasé). De plus, la génération des signaux de commande adaptés à la commande du pont redresseur dépend de l'application et est à la portée de l'homme du métier en fonction de cette application. En outre, la mise en oeuvre pratique des modes de réalisation qui ont été décrits est à la portée de l'homme du métier à partir des indications fonctionnelles qui ont été décrites ci-dessus.

## Revendications

1. Circuit de redressement comportant :
entre une première borne (23, 24) d'application d'une tension alternative (Vac) et une première borne (21) de fourniture d'une tension redressée (Vout), au moins une première diode (D3, D4) ;
entre une deuxième borne (24, 23) d'application de la tension alternative et une deuxième borne (22) de fourniture de la tension redressée, au moins un premier thyristor (TH1, TH2) à gâchette d'anode; et
au moins un premier étage (4, 5) de commande du premier thyristor (TH1, TH2), comportant :
un premier transistor (T4, T5) configuré pour coupler la gâchette du thyristor à une borne (26) de fourniture d'un potentiel (-Vdd') négatif par rapport au potentiel (GND) de la deuxième borne (22) de fourniture de la tension redressée (Vout) ; et
un deuxième transistor (M4, M5) configuré pour relier une borne de commande du premier transistor à une borne (25) de fourniture d'un potentiel positif (Vdd) par rapport au potentiel de la deuxième borne (22) de fourniture de la tension redressée,
l'anode du premier thyristor étant connectée à la deuxième borne (22) de fourniture de la tension redressée représentant un potentiel commun de tensions définies par lesdits potentiels positif et négatif.

2. Circuit selon la revendication 1, comportant en outre :
entre la deuxième borne (24, 23) d'application de la tension alternative (Vac) et la première borne (21) de fourniture de la tension redressée (Vout), au moins une deuxième diode (D4, D3) ;
entre la première borne (23, 24) d'application de la tension alternative (Vac) et la deuxième borne (22) de fourniture de la tension redressée (Vout), au moins un deuxième thyristor (TH1, TH2) à gâchette d'anode, l'anode du deuxième thyristor étant connectée à la deuxième borne (22) de fourniture de la tension redressée ; et
au moins un deuxième étage (4, 5) de commande du deuxième thyristor (TH1, TH2), comportant :
un troisième transistor (T4, T5) couplant la gâchette du deuxième thyristor à ladite borne (26) de fourniture dudit potentiel négatif (-Vdd') ; et
un quatrième transistor (M4, M5) reliant une borne de commande du troisième transistor à ladite borne (25) de fourniture dudit potentiel positif (Vdd).

3. Circuit de redressement comportant :
une première borne (23) et une deuxième borne (24), destinées à recevoir une tension alternative (Vac) ;
une troisième borne (21) et une quatrième borne (22), destinées à fournir une tension redressée (Vout) ;
un pont de redressement dont des bornes d'entrée sont respectivement connectées aux première et deuxième bornes, et dont des bornes de sortie sont respectivement connectées à la troisième borne (21), et reliées par un premier thyristor à gâchette d'anode (TH) à la quatrième borne (22) ; et
un étage (4) de commande du thyristor comportant :
un premier transistor (T4) configuré pour coupler la gâchette du premier thyristor à une borne (26) de fourniture d'un potentiel (-Vdd') négatif par rapport au potentiel (GND) de la deuxième borne (22) de fourniture de la tension redressée (Vout) ; et
un deuxième transistor (M4) configuré pour relier une borne de commande du premier transistor à une borne (25) de fourniture d'un potentiel positif (Vdd) par rapport au potentiel de la deuxième borne (22) de fourniture de la tension redressée,
l'anode du premier thyristor étant connectée au potentiel commun de tensions définies par lesdits potentiels positif et négatif.

4. Circuit selon l'une quelconque des revendications 1 à 3, comportant en outre un circuit (3) numérique et dans lequel le deuxième ou les deuxième et quatrième transistors (M4, M5) sont agencés pour être commandés par le circuit (3) numérique.

5. Circuit selon l'une quelconque des revendications 1 à 4, comportant en outre un élément résistif (R4, R5) et dans lequel l'élément résistif (R4, R5) est intercalé entre la gâchette du premier ou de chaque thyristor (TH; TH1, TH2) et le premier transistor ou chacun des premier et troisième transistors (T4, T5).

6. Circuit selon l'une quelconque des revendications 1 à 5, comportant en outre un élément résistif (R4', R5') et dans lequel l'élément résistif (R4', R5') est intercalé entre la base du premier ou de chacun des premier et troisième transistors (T4, T5) et le deuxième ou chacun des deuxième et quatrième transistors MOS (M4, M5).

7. Circuit selon l'une quelconque des revendications 1 à 6, dans lequel le premier ou les premier et troisième transistors sont des transistors bipolaires (T4, T5), de préférence de type NPN.

8. Circuit selon l'une quelconque des revendications 1 à 7, dans lequel le deuxième ou les deuxième et quatrième transistors sont des transistors MOS (M4, M5).

9. Circuit selon la revendication 4 ou l'une quelconque des revendications 5 à 8 dans leur rattachement à la revendication 4, comportant en outre un circuit d'alimentation (6) connecté à la première borne (21) de fourniture de la tension redressée et agencé pour fournir une tension positive (Vdd) et un condensateur (Ca) reliant le circuit d'alimentation à la deuxième borne (22) de fourniture de la tension redressée et dans lequel le circuit de commande (3) est agencé pour être alimenté par la tension positive (Vdd) du circuit d'alimentation (6).

10. Circuit selon la revendication 9, comportant en outre un circuit de pompe de charge, qui est agencé pour fournir ledit potentiel négatif (-Vdd) à partir du circuit d'alimentation (6).

11. Circuit selon l'une quelconque des revendications 1 à 10, comportant en outre au moins une diode (D6, D7)et un élément résistif (R6) et dans lequel l'au moins une diode (D6, D7) en série avec l'élément résistif (R6) relie la deuxième borne (22) de fourniture de la tension redressée (Vout) à une des bornes (23, 24) d'application de la tension alternative (Vac).

## Patentansprüche

1. Gleichrichterschaltung, aufweisend:
wenigstens eine erste Diode (D3, D4) zwischen einem ersten Anschluss (23, 24), der zum Empfangen einer Wechselspannung (Vac) konfiguriert ist, und einem ersten Anschluss (21), der zum Bereitstellen einer gleichgerichteten Spannung (Vout) konfiguriert ist;
wenigstens einen ersten Anoden-Gate-Thyristor (TH1, TH2) zwischen einem zweiten Anschluss (24, 23), der zum Empfangen der Wechselspannung konfiguriert ist, und einem zweiten Anschluss (22), der zum Bereitstellen der gleichgerichteten Spannung konfiguriert ist; und
wenigstens eine erste Stufe (4, 5) zum Steuern des ersten Thyristors (TH1, TH2), umfassend:
einen ersten Transistor (T4, T5), der konfiguriert ist, zum Koppeln des Gate des Thyristors mit einem Anschluss (26), der konfiguriert ist zum Vorsehen eines Potentials (-Vdd'), das negativ ist in Bezug auf das Potential (GND) des zweiten Anschlusses (22), der konfiguriert ist zum Bereitstellen der gleichgerichteten Spannung (Vout); und
einen zweiten Transistor (M4, M5), der konfiguriert ist zum Verbinden eines Steueranschlusses des ersten Transistors mit einem Anschluss (25), der konfiguriert ist zum Vorsehen eines Potentials (Vdd), das positiv ist in Bezug auf das Potential des zweiten Anschlusses (22), der konfiguriert ist zum Bereitstellen der gleichgerichteten Spannung,
wobei die Anode des ersten Thyristors mit dem zweiten Anschluss (22) verbunden ist, der konfiguriert ist zum Bereitstellen der gleichgerichteten Spannung, was ein gemeinsames Potential von Spannungen darstellt, welche durch das positive und negative Potential definiert sind.

2. Schaltung nach Anspruch 1, ferner aufweisend:
wenigstens eine zweite Diode (D4, D3) zwischen dem zweiten Anschluss (24, 23), der zum Empfangen der Wechselspannung (Vac) konfiguriert ist, und dem ersten Anschluss (21), der zum Bereitstellen der gleichgerichteten Spannung (Vout) konfiguriert ist;
wenigstens einen zweiten Anoden-Gate-Thyristor (TH1, TH2) zwischen dem ersten Anschluss (23, 24), der zum Empfangen der Wechselspannung (Vac) konfiguriert ist, und dem zweiten Anschluss (22), der zum Bereitstellen der gleichgerichteten Spannung (Vout) konfiguriert ist, wobei die Anode des zweiten Thyristors mit dem zweiten Anschluss (22), der zum Bereitstellen der gleichgerichteten Spannung konfiguriert ist, verbunden ist; und
wenigstens eine zweite Stufe (4, 5) zum Steuern des zweiten Thyristors (TH1, TH2), aufweisend:
einen dritten Transistor (T4, T5), der das Gate des zweiten Thyristors mit dem Anschluss (26) koppelt, der konfiguriert ist zum Bereitstellen des negativen Potentials (-Vdd'); und
einen vierten Transistor (M4, M5), der einen Steueranschluss des dritten Transistors mit dem Anschluss (25) verbindet, der konfiguriert ist zum Bereitstellen des positiven Potentials (Vdd).

3. Gleichrichterschaltung, aufweisend:
einen ersten Anschluss (23) und einen zweiten Anschluss (24), die zum Empfangen einer Wechselspannung (Vac) konfiguriert sind;
einen dritten Anschluss (21) und einen vierten Anschluss (22), die zum Bereitstellen einer gleichgerichteten Spannung (Vout) konfiguriert sind;
eine Gleichrichterbrücke mit Eingangsanschlüssen, die mit den ersten beziehungsweise zweiten Anschlüssen verbunden sind, und mit Ausgangsanschlüssen, die mit dem dritten Anschluss (21) beziehungsweise über einen ersten Anoden-Gate-Thyristor (TH) mit dem vierten Anschluss (22) verbunden sind; und
eine Stufe (4) zum Steuern des Thyristors, aufweisend:
einen ersten Transistor (T4), der konfiguriert ist zum Koppeln des Gate des ersten Thyristors mit einem Anschluss (26), der konfiguriert ist zum Bereitstellen eines Potentials (-Vdd'), das negativ ist in Bezug auf das Potential (GND) des zweiten Anschlusses (22), der konfiguriert ist zum Bereitstellen der gleichgerichteten Spannung (Vout); und
einen zweiten Transistor (M4), der konfiguriert ist zum Verbinden eines Steueranschlusses des ersten Transistors mit einem Anschluss (25), der konfiguriert ist zum Bereitstellen eines Potentials (Vdd), das positiv ist in Bezug auf das Potential des zweiten Anschlusses (22), der konfiguriert ist zum Bereitstellen der gleichgerichteten Spannung,
wobei die Anode des ersten Thyristors mit dem gemeinsamen Potential von Spannungen verbunden ist, das durch die positiven und negativen Potentiale definiert ist.

4. Schaltung nach einem der Ansprüche 1 bis 3, ferner aufweisend eine digitale Schaltung (3), wobei der zweite oder die zweiten und vierten Transistoren (M4, M5) so angeordnet ist/sind, dass er/sie von der digitalen Schaltung (3) gesteuert werden können.

5. Schaltung nach einem der Ansprüche 1 bis 4, ferner aufweisend ein Widerstandselement (R4, R5), wobei das Widerstandselement (R4, R5) zwischen dem Gate des ersten oder jedes Thyristors (TH; TH1, TH2) und dem ersten Transistor oder jedem der ersten und dritten Transistoren (T4, T5) angeordnet ist.

6. Schaltung nach einem der Ansprüche 1 bis 5, ferner aufweisend ein Widerstandselement (R4', R5'), wobei das Widerstandselement (R4', R5') zwischen der Basis des ersten oder jedes der ersten und dritten Transistoren (T4, T5) und dem zweiten oder jedem der zweiten und vierten MOS-Transistoren (M4, M5) angeordnet ist.

7. Schaltung nach einem der Ansprüche 1 bis 6, wobei der erste oder die ersten und dritten Transistoren ein Bipolartransistor (T4, T5), vorzugsweise vom Typ NPN, ist/sind.

8. Schaltung nach einem der Ansprüche 1 bis 7, wobei der zweite oder die zweiten und vierten Transistoren ein MOS-Transistor (M4, M5) ist/sind.

9. Schaltung nach Anspruch 4 oder nach einem der Ansprüche 5 bis 8 und Anspruch 4, ferner aufweisend eine Stromversorgungsschaltung (6), die mit dem ersten Anschluss (21) verbunden ist, der konfiguriert ist zum Bereitstellen der gleichgerichteten Spannung, und die angeordnet ist zum Bereitstellen einer positiven Spannung (Vdd), und einen Kondensator (Ca), der die Stromversorgungsschaltung mit dem zweiten Anschluss (22) verbindet, der konfiguriert ist zum Bereitstellen der gleichgerichteten Spannung, und wobei die Steuerschaltung (3) angeordnet ist, um mit der positiven Spannung (Vdd) der Stromversorgungsschaltung (6) versorgt zu werden.

10. Schaltung nach Anspruch 9, ferner aufweisend eine Ladungspumpenschaltung, die angeordnet ist zum Bereitstellen des negativen Potentials (-Vdd) von der Stromversorgungsschaltung (6).

11. Schaltung nach einem der Ansprüche 1 bis 10, ferner aufweisend wenigstens eine Diode (D6, D7) und ein Widerstandselement (R6), wobei die wenigstens eine Diode (D6, D7) in Reihe mit dem Widerstandselement (R6) den zweiten Anschluss (22), der konfiguriert ist zum Bereitstellen der gleichgerichteten Spannung (Vout), mit einem der Anschlüsse (23, 24) verbindet, die konfiguriert sind zum Empfangen der Wechselspannung (Vac).

## Claims

1. A rectifying circuit comprising:
between a first terminal (23, 24) configured to receive an AC voltage (Vac) and a first terminal (21) configured to supply a rectified voltage (Vout), at least one first diode (D3, D4);
between a second terminal (24, 23) configured to receive the AC voltage and a second terminal (22) configured to supply the rectified voltage, at least one first anode-gate thyristor (TH1, TH2); and
at least one first stage (4, 5) for controlling the first thyristor (TH1, TH2), comprising:
a first transistor (T4, T5) configured to couple the gate of the thyristor to a terminal (26) configured to supply a potential (-Vdd') which is negative with respect to the potential (GND) of the second terminal (22) configured to supply the rectified voltage (Vout); and
a second transistor (M4, M5) configured to connect a control terminal of the first transistor to a terminal (25) configured to provide a potential (Vdd) which is positive with respect to the potential of the second terminal (22) configured to supply the rectified voltage,
the anode of the first thyristor being connected to the second terminal (22) configured to supply the rectified voltage, which represents a common potential of voltages defined by said positive and negative potentials.

2. The circuit of claim 1, further comprising:
between the second terminal (24, 23) configured to receive the AC voltage (Vac) and the first terminal (21) configured to supply the rectified voltage (Vout), at least one second diode (D4, D3);
between the first terminal (23, 24) configured to receive the AC voltage (Vac) and the second terminal (22) configured to supply the rectified voltage (Vout), at least one second anode-gate thyristor (TH1, TH2), the anode of the second thyristor being connected to the second terminal (22) configured to supply the rectified voltage; and
at least one second stage (4, 5) for controlling the second thyristor (TH1, TH2), comprising:
a third transistor (T4, T5) coupling the gate of the second thyristor to said terminal (26) configured to supply said negative potential (-Vdd'); and
a fourth transistor (M4, M5) connecting a control terminal of the third transistor to said terminal (25) configured to supply said positive potential (Vdd).

3. A rectifying circuit comprising:
a first terminal (23) and a second terminal (24), configured to receive an AC voltage (Vac);
a third terminal (21) and a fourth terminal (22), configured to supply a rectified voltage (Vout);
a rectifying bridge having input terminals respectively connected to the first and second terminals, and having output terminals respectively connected to the third terminal (21), and connected by a first anode-gate thyristor (TH) to the fourth terminal (22); and
a stage (4) for controlling the thyristor comprising:
a first transistor (T4) configured to couple the gate of the first thyristor to a terminal (26) configured to supply a potential (-Vdd') which is negative with respect to the potential (GND) of the second terminal (22) configured to supply the rectified voltage (Vout); and
a second transistor (M4) configured to connect a control terminal of the first transistor to a terminal (25) configured to supply a potential (Vdd) which is positive with respect to the potential of the second terminal (22) configured to supply the rectified voltage,
the anode of the first thyristor being connected to the common potential of voltages defined by said positive and negative potentials.

4. The circuit of any of claims 1 to 3, further comprising a digital circuit (3), and wherein the second or the second and fourth transistors (M4, M5) are arranged to be controlled by the digital circuit (3).

5. The circuit of any of claims 1 to 4, further comprising a resistive element (R4, R5), and wherein the resistive element (R4, R5) is interposed between the gate of the first or of each thyristor (TH; TH1, TH2) and the first transistor or each of the first and third transistors (T4, T5).

6. The circuit of any of claims 1 to 5, further comprising a resistive element (R4', R5'), and wherein the resistive element (R4', R5') is interposed between the base of the first or of each of the first and third transistors (T4, T5) and the second or each of the second and fourth MOS transistors (M4, M5).

7. The circuit of any of claims 1 to 6, wherein the first or the first and third transistors are bipolar transistors (T4, T5), preferably of type NPN.

8. The circuit of any of claims 1 to 7, wherein the second or the second and fourth transistors are MOS transistors (M4, M5).

9. The circuit of claim 4 or of any of claims 5 to 8 and of claim 4, further comprising a power supply circuit (6) connected to the first terminal (21) configured to supply the rectified voltage, and arranged to supply a positive voltage (Vdd) and a capacitor (Ca) connecting the power supply circuit to the second terminal (22) configured to supply the rectified voltage and wherein the control circuit (3) is arranged to be supplied by the positive voltage (Vdd) of the power supply circuit (6).

10. The circuit of claim 9, further comprising a charge pump circuit, which is arranged to supply said negative potential (-Vdd) from the power supply circuit (6).

11. The circuit of any of claims 1 to 10, further comprising at least one diode (D6, D7) and a resistive element (R6), and wherein the at least one diode (D6, D7) in series with the resistive element (R6) connects the second terminal (22) configured to supply the rectified voltage (Vout) to one of the terminals (23, 24) configured to receive the AC voltage (Vac).
